# EUROPEAN PATENT APPLICATION

(11) **EP 4 703 605 A1**
(43) Date of publication of application: **04.03.2026**
(21) Application number: 24764172.3
(22) Date of filing: 27.02.2024
(51) Int. Cl.: F16H 59/02, F16H 59/10, H02K 7/116

(54) **ROTARY REDUCTION ACTUATOR HAVING ROTATIONAL POSITION DETECTION FUNCTION, AND ELECTRONIC SHIFT LEVER SYSTEM EMPLOYING SAME**

(30) Priority: 28.02.2023 KR 20230027053
(71) Applicant: Pyong Hwa Valeo Co., Ltd., Daegu 42701 (KR)
(72) Inventor: LEE, Hee Rak, Daegu 42760 (KR)
(74) Representative: Isarpatent
(86) International application number: PCT/KR2024/002512
(87) International publication number: WO 2024/181773

(57) **Abstract**

The present invention relates to a rotary reduction actuator capable of more accurately detecting a rotational position of an actuator output shaft by detecting a rotational position of the actuator at an output end of a reduction gear unit, thereby improving reliability and robustness of shift control. The rotary reduction actuator includes a drive shaft installed on an output side of an electric motor, a reduction gear unit configured to reduce and output rotation of the drive shaft, and a rotational angle sensing unit configured to detect rotational displacement of the output end of the reduction gear unit. The rotational angle sensing unit includes an interlocking structure interlocked with the output end of the reduction gear unit, a sensing magnet installed to operate in interlocking relation with operation of the interlocking structure, and a rotational angle detection sensor configured to detect rotational displacement of the sensing magnet.

## Description

### TECHNICAL FIELD

The present invention relates to a rotary reduction actuator having a rotational position detection function and an electronic shift lever system employing the same, and more particularly to a rotary reduction actuator having a rotational position detection function capable of more accurately measuring rotational displacement of an output shaft of the actuator by detecting a rotational position of the actuator at an output end of a reduction gear unit, and an electronic shift lever system employing the same.

### BACKGROUND ART

Generally, devices that provide driving force generated from a power source to an output side have been developed in various forms, including a linear actuator that converts rotary driving force into a linear direction and outputs the same, a rotary actuator that transfers rotary driving force as it is to an output side, and a conversion actuator that transfers driving force in a linear direction to an output side in a linear or rotary direction.

In particular, development has also been made for rotary reduction actuators capable of reducing an input-side rotational speed by means of a reduction device in a process of transferring driving force to an output side, thereby multiplying input-side torque and providing the same to the output side.

For example, a linear actuator outputs an operating force in a linear direction by using a conversion mechanism such as a ball screw to convert rotary driving force generated from an electric motor into a linear direction, a rotary actuator multiplies and outputs rotary driving force generated from an electric motor by means of a torque-increasing mechanism such as a reducer, and a conversion actuator transfers driving force in a linear direction directly to an output side by using a linear motor, or transfers rotary driving force generated from an electric motor directly to an output side.

As a conventional rotary reduction actuator, a rotary actuator disclosed in Japanese Laid-Open Patent Publication No. 2021-151095 is configured such that rotational driving force generated from a rotation shaft 37 of a motor 30 is reduced through a reducer 40 and transmitted to an output member 44.

In such a configuration, a rotational position of the rotation shaft 37 of the motor 30 is detected through a position detection unit 55, wherein the position detection unit 55 includes a magnetic sensor 56 installed in a front housing 21 and a magnet 57 installed on a rotor core 38.

Accordingly, since the position detection unit 55 provided in the conventional rotary reduction actuator is located at an input end of the motor 30, there is a problem in that accurate position control with respect to an output shaft is difficult to perform. This results from a difference in rotational displacement caused by backlash occurring in the rotation shaft 37 and the reducer 40 during a process in which rotational driving force generated from the motor 30 is transmitted through the reducer 40 and finally transferred to the output member 44.

As a result, in the conventional rotary reduction actuator, not only is it impossible to accurately detect rotational displacement using only the position detection unit 55 located at the input end of the motor 30, but also position control with respect to the output shaft is inevitably performed inaccurately due to errors caused by differences in rotational displacement occurring during transmission to the output member 44.

### DETAILED DESCRIPTION OF THE INVENTION

### TECHNICAL PROBLEM

A technical problem to be solved by the present invention is to provide a rotary reduction actuator having a rotational position detection function capable of detecting a rotational position of an actuator at an output end of a reduction gear unit to more accurately measure rotational displacement of an output shaft of the actuator, while simultaneously enabling estimation of a rotational position of a drive shaft of an electric motor, and thereby improving reliability and robustness of control in performing displacement control on an operation target based on accurate rotational position information of the output shaft of the actuator.

Another technical problem to be solved by the present invention is to provide an electronic shift lever system employing a rotary reduction actuator, in which a rotary reduction actuator capable of more accurately measuring rotational displacement with respect to an output shaft is applied to a select shaft of a transmission, thereby enabling accurate control operation during shift control.

### SOLUTION TO PROBLEM

As a preferred embodiment of the present invention, a rotary reduction actuator is disclosed, which includes a drive shaft installed on an output side of an electric motor, a reduction gear unit configured to reduce and output rotation of the drive shaft, and a rotational angle sensing unit configured to detect rotational displacement of an output end of the reduction gear unit, wherein the rotational angle sensing unit includes an interlocking structure interlocked with the output end of the reduction gear unit, a sensing magnet installed to operate in interlocking relation with operation of the interlocking structure, and a rotational angle detection sensor configured to detect rotational displacement of the sensing magnet.

As a preferred embodiment of the present invention, a rotary reduction actuator is disclosed, wherein the interlocking structure includes a driving-side sensing gear interlocked with an output-shaft gear provided at the output end of the reduction gear unit, and a driven-side sensing gear interlocked with the driving-side sensing gear, wherein a rotation center of the driving-side sensing gear is set coaxially with the drive shaft, and a rotation center of the driven-side sensing gear is set at a position spaced apart from the rotation center of the driving-side sensing gear.

As a preferred embodiment of the present invention, a rotary reduction actuator is disclosed, wherein the sensing magnet is installed on a sensing shaft located at a rotation center of the driven-side sensing gear, and the rotational angle detection sensor is installed at a position facing the sensing magnet.

As a preferred embodiment of the present invention, a rotary reduction actuator is disclosed, wherein the driving-side sensing gear is arranged and assembled concentrically with respect to a rotation center of the output-shaft gear.

As a preferred embodiment of the present invention, a rotary reduction actuator is disclosed, wherein the driving-side sensing gear includes a coupling protrusion on an inner circumferential surface thereof, and the output-shaft gear includes a coupling recess on an outer circumferential surface thereof for engagement with the coupling protrusion.

As a preferred embodiment of the present invention, a rotary reduction actuator is disclosed, wherein the driving-side sensing gear is integrally formed concentrically with respect to a rotation center of the output-shaft gear.

As a preferred embodiment of the present invention, a rotary reduction actuator is disclosed, wherein the driven-side sensing gear is detachably installed with respect to the sensing shaft.

As a preferred embodiment of the present invention, a rotary reduction actuator is disclosed, wherein the driven-side sensing gear includes a gear body portion having gear teeth, and a gear shaft portion integrally formed with the gear body portion and disposed at an axial center region of the sensing shaft, and wherein the gear shaft portion is formed with a coupling recess for engagement with a shaft-coupling protrusion provided on the sensing shaft.

As a preferred embodiment of the present invention, an electronic shift lever system is disclosed, which is configured by applying the above-described rotary reduction actuator to a select shaft of a transmission.

### ADVANTAGEOUS EFFECTS OF THE INVENTION

The rotary reduction actuator having a rotational position detection function according to an embodiment of the present invention is capable of detecting a rotational position of the actuator through a rotational angle sensing unit provided at an output end of a reduction gear unit, thereby not only more accurately measuring rotational displacement with respect to an output shaft of the actuator, but also enabling estimation of a rotational position of a drive shaft of an electric motor.

As a result, the rotary reduction actuator according to an embodiment of the present invention can achieve effects of ensuring reliability and robustness in performing displacement control on an operation target based on accurate rotational position information of the actuator detected at the output end of the reduction gear unit.

In this configuration, the displacement control on the operation target may be exemplified by a device in which a series of control operations are performed based on rotational displacement, such as an electronic shift lever (SBW; Shift By Wire) system.

### BRIEF DESCRIPTION OF THE DRAWINGS

FIG. 1 is a perspective view illustrating an external appearance of a rotary reduction actuator according to an embodiment of the present invention.
FIG. 2 is a longitudinal cross-sectional view illustrating an assembled relationship of components constituting the rotary reduction actuator according to an embodiment of the present invention.
FIG. 3 is an exploded perspective view illustrating external components constituting the rotary reduction actuator according to an embodiment of the present invention.
FIG. 4 is an exploded perspective view illustrating components installed inside a gear housing shown in FIG. 3.
FIG. 5 is a front view illustrating a drive shaft shown in FIG. 4.
FIG. 6 is a perspective view illustrating a state in which a reduction gear unit is assembled to the gear housing shown in FIG. 4.
FIG. 7 is an exploded perspective view illustrating a first-stage disassembly of the reduction gear unit shown in FIG. 6 from the gear housing.
FIG. 8 is an exploded perspective view illustrating a second-stage disassembly of the reduction gear unit shown in FIG. 6 from the gear housing.
FIG. 9 is an exploded perspective view illustrating the disassembled state of FIG. 8 as viewed from a bottom side.
FIG. 10 is an exploded perspective view illustrating a coupling relationship between a driven-side sensing gear and a sensing shaft shown in FIG. 8 or FIG. 9.

### DETAILED DESCRIPTION OF EMBODIMENTS

Hereinafter, preferred embodiments of the present invention will be described in detail with reference to the accompanying illustrative drawings.

Referring to the drawings, a rotary reduction actuator 1 having a rotational position detection function according to an embodiment of the present invention includes a housing 10, an electric motor 20, a drive shaft 30, a reduction gear unit, and a rotational angle sensing unit.

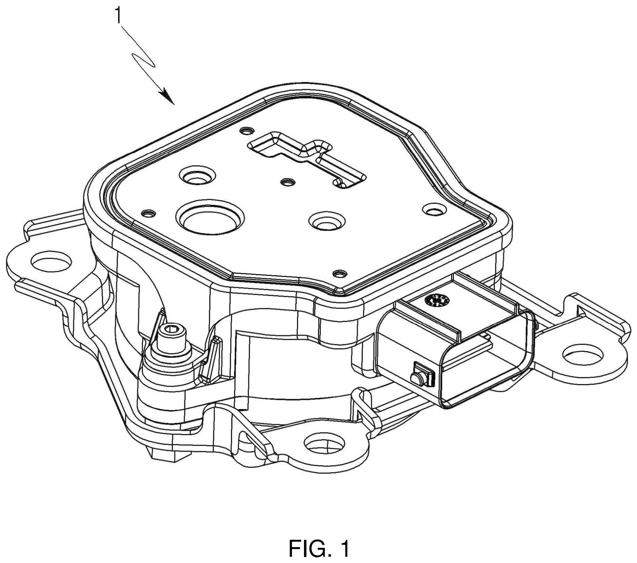

Referring to Figs. 1 to 3, the housing 10 may be largely divided into a motor housing 11 accommodating the electric motor 20 and a gear housing 12 accommodating the reduction gear unit.

In addition, the housing 10 further includes an upper cover 13 disposed on an upper side of the motor housing 11, and a lower cover 14 disposed on a lower side of the gear housing 12. In this configuration, the lower cover 14 corresponds to a type of mounting bracket that enables the rotary reduction actuator 1 to be mounted at an appropriate position.

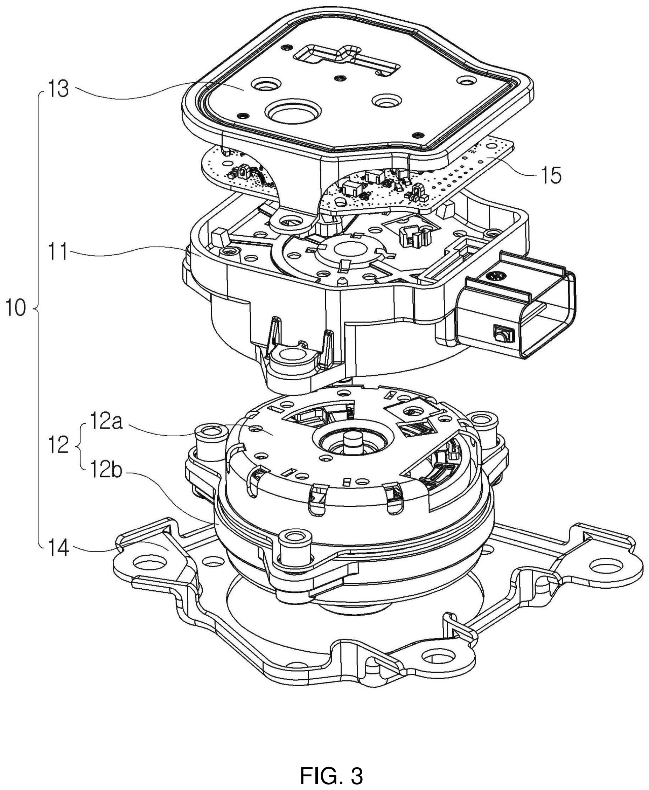

In addition, the gear housing 12 may be configured to include an upper casing 12a and a lower casing 12b that are divided in an upper-lower direction and assembled together. In Fig. 3, reference numeral 15, which has not been described above, corresponds to a printed circuit board that performs functions such as receiving control signals from an external source to control driving of the electric motor 20, or outputting information on rotational displacement of the reduction gear unit to the outside.

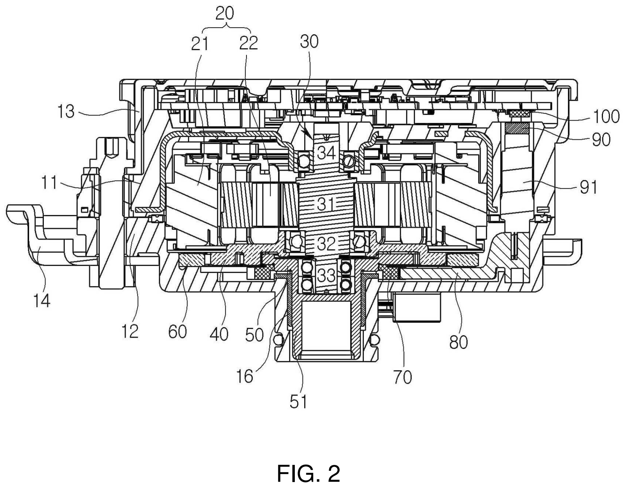

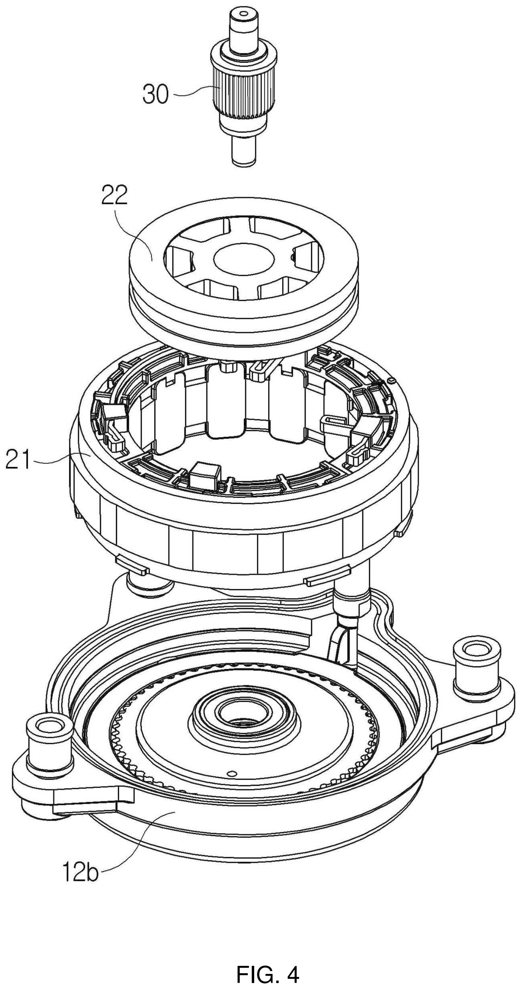

Referring to Figs. 2 and 4, the electric motor 20 includes a stator core 21 and a rotor core 22.

In this configuration, the stator core 21 is configured to be arranged concentrically with respect to an axial center of the drive shaft 30 that defines a rotation center of the electric motor 20. In addition, the rotor core 22 is installed on an outer circumferential surface coaxially with respect to the axial center of the drive shaft 30 so as to rotate integrally therewith when energized.

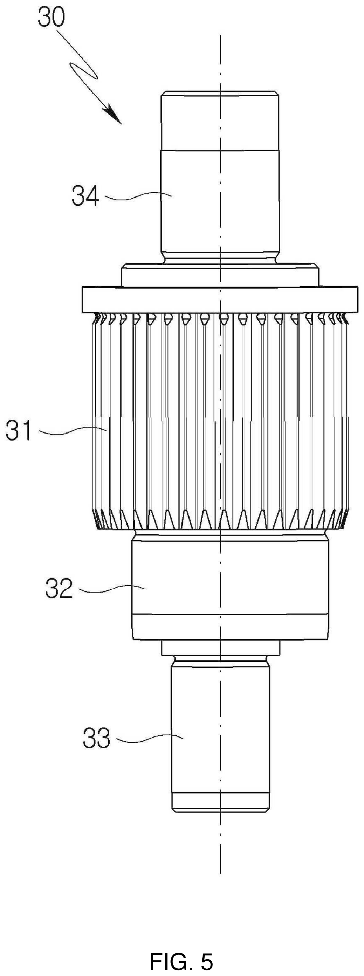

Referring to Figs. 4 and 5, the drive shaft 30 is configured to have a structure capable of being interlocked with the rotor core 22 of the electric motor 20.

For this purpose, the drive shaft 30 is configured to integrally include a reference shaft portion 31 generally positioned at a center thereof for shaft coupling with the rotor core 22 of the electric motor 20, an eccentric shaft portion 32 extending in an axial direction from one side of the reference shaft portion 31 for eccentrically installing an input gear 40 constituting the reduction gear unit in a state of being relatively rotatable with respect to the drive shaft 30, a mounting shaft portion 33 extending in an axial direction from one side of the eccentric shaft portion 32 for coaxially installing an output-shaft gear 50 constituting the reduction gear unit in a state of being relatively rotatable with respect to the drive shaft 30, and an installation shaft portion 34 extending in an axial direction from the other side of the reference shaft portion 31 for coaxial installation in a rotatable state with respect to the motor housing 11.

In this configuration, the eccentric shaft portion 32 is formed as a cam-shaped structure in which one side portion thereof is eccentrically offset radially outward from an axial center defined by the reference shaft portion 31, the mounting shaft portion 33, and the installation shaft portion 34, and protrudes outward. Accordingly, the input gear 40 of the reduction gear unit can realize eccentric motion rotational displacement during rotation of the drive shaft 30.

In addition, the reference shaft portion 31, the eccentric shaft portion 32, the mounting shaft portion 33, and the installation shaft portion 34 constituting the drive shaft 30 are each installed to be rotatably supported via a plurality of bearing members provided inside the motor housing 11, as illustrated in Fig. 2.

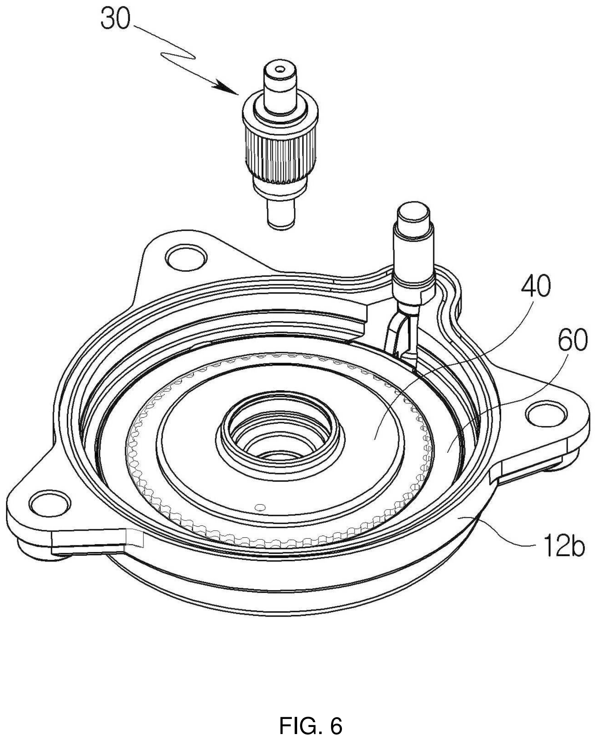

Referring to Figs. 6 to 9, the reduction gear unit includes an input gear 40, an output-shaft gear 50, and a ring gear 60.

In this configuration, the input gear 40 and the output-shaft gear 50 are installed in a structure assembled with respect to an outer circumferential surface of the drive shaft 30. In addition, the ring gear 60 is installed in a structure assembled with respect to the lower casing 12b constituting the gear housing 12 in a state in which rotation thereof is restricted. Detailed configurations of each of the input gear 40, the output-shaft gear 50, and the ring gear 60 are as follows.

The input gear 40 is configured to be arranged eccentrically with respect to a rotation center of the drive shaft 30 via the eccentric shaft portion 32. In particular, the input gear 40 is configured to be installed to be relatively rotatable with respect to the drive shaft 30 via a bearing member.

In addition, the input gear 40 is configured to continuously include external teeth 41 along an entire circumferential portion of an outer circumferential surface thereof for eccentric tooth meshing with the ring gear 60.

The output-shaft gear 50 is configured to be arranged coaxially with respect to the rotation center of the drive shaft 30 via the mounting shaft portion 33. In particular, the output-shaft gear 50 is configured to have a structure capable of being interlocked with the input gear 40 via a wobbling-motion inducing part, and is configured to be installed to be relatively rotatable with respect to the drive shaft 30 via a bearing member.

In addition, the output-shaft gear 50 integrally includes a boss portion 51 for being assembled to be relatively rotatable with respect to the lower casing 12b of the gear housing 12. In this configuration, the boss portion 51 is formed to extend axially from the output-shaft gear 50. At this time, the boss portion 51 is inserted into an interior of a hollow sleeve 16 mounted in a coupling hole 12c of the lower casing 12b, so as to maintain stable rotation.

In particular, the boss portion 51 serves to output rotational force provided from the output-shaft gear 50 to the outside. For example, the boss portion 51 may be used for shaft connection for power transmission with an external device (not shown), since rotational force provided from the output-shaft gear 50 can be transmitted to the external device through the boss portion 51. In this case, the external device may be exemplified by an electronic shift lever (SBW; Shift By Wire) system, and a portion connected to the boss portion 51 may correspond to a control shaft (not shown) capable of providing rotational driving force to a detent plate.

The ring gear 60 is configured to locally mesh internally with the input gear 40 via an eccentric tooth-meshing portion. In particular, the ring gear 60 is fixed to the lower casing 12b of the gear housing 12 constituting the housing 10 and installed in a state in which rotation thereof is restricted, so as to induce decelerated rotation of the output-shaft gear 50 according to wobbling motion of the input gear 40.

In addition, the ring gear 60 is configured to continuously include internal teeth 61 along an entire circumferential portion of an inner circumferential surface thereof for eccentric tooth meshing with the external teeth 41 of the input gear 40.

In addition, the ring gear 60 is configured to integrally include restraining protrusions 62 on an outer circumferential surface thereof. In this configuration, the restraining protrusions 62 serve to restrain rotation of the ring gear 60 with respect to the lower casing 12b of the gear housing 12. That is, the restraining protrusions 62 can restrain rotation of the ring gear 60 through coupling with corresponding recesses (not shown) formed in the lower casing 12b. For this purpose, the restraining protrusions 62 are preferably provided at appropriate locations over an entire circumferential portion of the outer circumferential surface of the ring gear 60.

As a result, since the ring gear 60 is installed in a state in which rotation thereof is restrained with respect to the lower casing 12b, the ring gear 60 can provide an appropriate reaction force against eccentric motion of the input gear 40, whereby decelerated rotation of the output-shaft gear 50 can be achieved in interlocking relation with the eccentric motion of the input gear 40.

Meanwhile, the eccentric tooth-meshing portion refers to localized eccentric tooth meshing formed between the external teeth 41 of the input gear 40 and the internal teeth 61 of the ring gear 60, wherein the external teeth 41 of the input gear 40 are arranged eccentrically with respect to an axial center of the drive shaft 30, and the internal teeth 61 of the ring gear 60 are arranged coaxially with respect to the axial center of the drive shaft 30 so as to be locally and eccentrically meshed with the external teeth 41 of the input gear 40. In this configuration, the external teeth 41 of the input gear 40 and the internal teeth 61 of the ring gear 60 constitute a so-called cycloidal gear-type reduction gear train that is internally meshed in an eccentric state with respect to the axial center of the drive shaft 30.

In addition, the wobbling-motion inducing part includes inwardly oriented paired protrusions 42 provided on the input gear 40, and outwardly oriented paired receiving grooves 52 provided on the output-shaft gear 50 and engaged with the paired protrusions 42. That is, the wobbling-motion inducing part corresponds to an interlocking region between the paired protrusions 42 of the input gear 40 and the paired receiving grooves 52 of the output-shaft gear 50.

In this configuration, the paired protrusions 42 and the paired receiving grooves 52 are radially arranged along entire circumferential portions of the input gear 40 and the output-shaft gear 50, respectively, and are continuously formed at predetermined intervals so as to have a shape enabling tooth contact by meshing therebetween.

For example, the paired protrusions 42 may be configured in a form of structures protruding radially inward from one side surface of the input gear 40 toward the paired receiving grooves 52 of the output-shaft gear 50. In addition, the paired receiving grooves 52 may be configured in a form of recesses concavely formed radially outward from an outer circumferential surface of the output-shaft gear 50 toward the paired protrusions 42 of the input gear 40.

Accordingly, during rotation of the drive shaft 30, decelerated rotation according to eccentric motion of the input gear 40 can be transmitted to decelerated rotation of the output-shaft gear 50 via the wobbling-motion inducing part.

More specifically, during rotation of the drive shaft 30, the input gear 40 revolves while performing wobbling motion by the number of rotations of the electric motor 20 due to rotational force provided from the eccentric shaft portion 32, and simultaneously rotates by a reduction ratio set by the reduction gear unit through localized eccentric tooth meshing formed between the external teeth 41 of the input gear 40 and the internal teeth 61 of the ring gear 60, whereby decelerated rotation of the output-shaft gear 50 can be achieved.

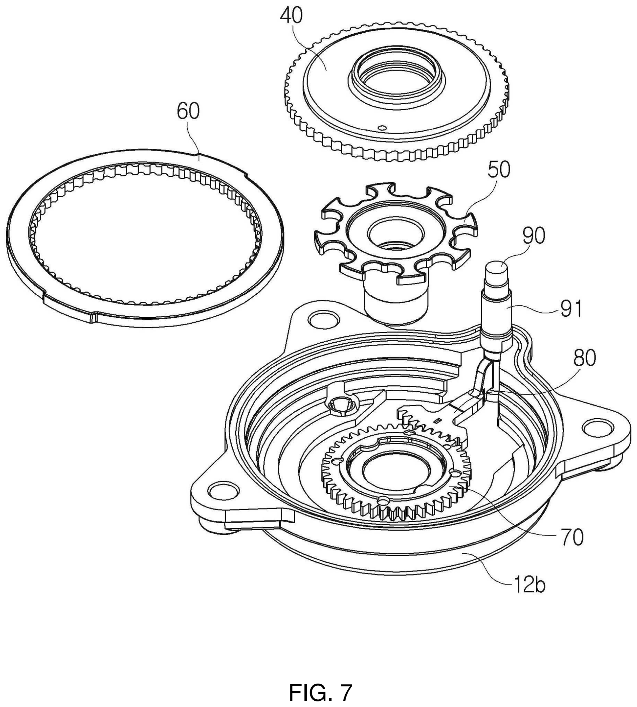

Referring to Figs. 7 to 9, the rotational angle sensing unit includes an interlocking structure configured to operate in interlocking relation with an output end of the reduction gear unit, a sensing magnet 90 installed to operate in interlocking relation with operation of the interlocking structure, and a rotational angle detection sensor 100 configured to detect rotational displacement of the sensing magnet 90.

Here, the interlocking structure may be implemented as a device having a tooth-meshing structure by gears. For example, the interlocking structure may be implemented by a driving-side sensing gear 70 installed to interlock with the output-shaft gear 50 provided at the output end of the reduction gear unit, and a driven-side sensing gear 80 installed to interlock with the driving-side sensing gear 70.

In this configuration, a rotation center of the driving-side sensing gear 70 is preferably set coaxially with the drive shaft 30, and a rotation center of the driven-side sensing gear 80 is preferably set at a position spaced apart by a predetermined distance from the rotation center of the driving-side sensing gear 70.

In addition, the sensing magnet 90 is installed on a sensing shaft 91 located at a rotation center of the driven-side sensing gear 80, and the rotational angle detection sensor 100 may be installed at a position facing the sensing magnet 90 inside the motor housing 11. At this time, the sensing shaft 91 rotates integrally with the driven-side sensing gear 80 and is preferably installed to be rotatable with respect to the lower casing 12b of the gear housing 12.

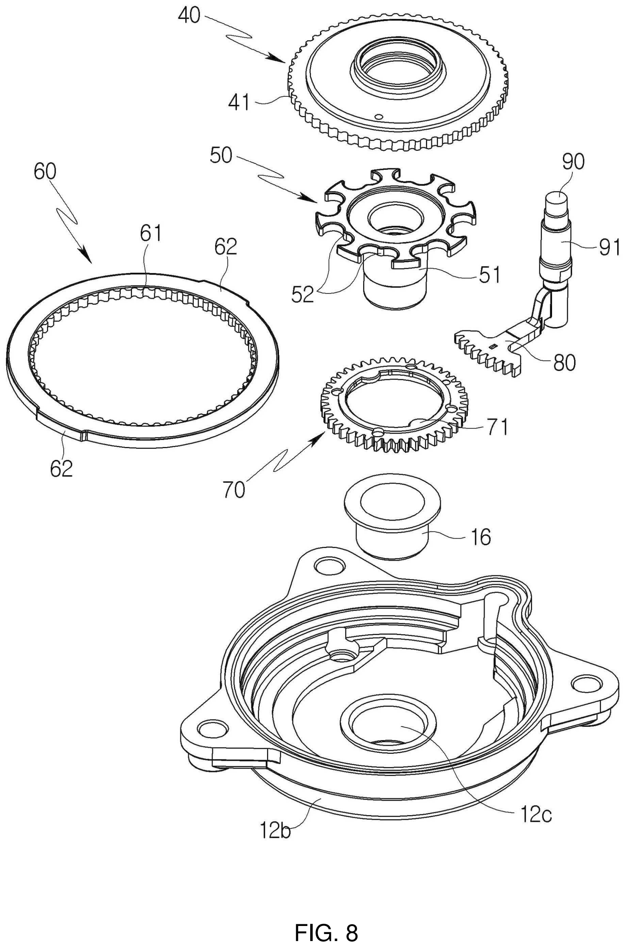

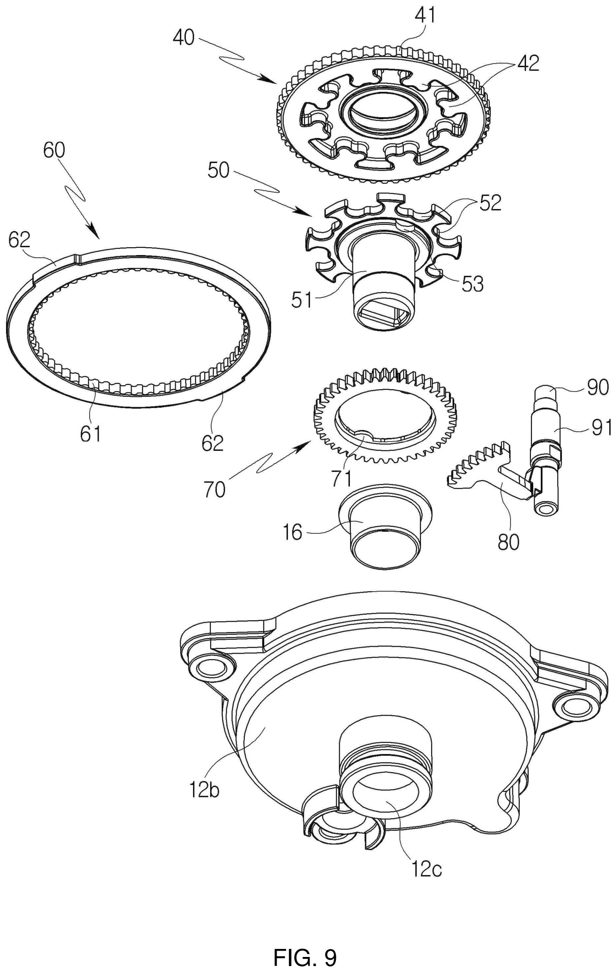

As one embodiment of the present invention, as illustrated in Figs. 8 and 9, the driving-side sensing gear 70 may be configured to be arranged and assembled concentrically with respect to a rotation center of the output-shaft gear 50 of the reduction gear unit. That is, the driving-side sensing gear 70 may be configured in a form arranged and assembled concentrically with respect to the rotation center of the output-shaft gear 50 corresponding to a rotation center of the output end of the reduction gear unit.

For this purpose, the driving-side sensing gear 70 includes a coupling protrusion 71 on an inner circumferential surface thereof, and the output-shaft gear 50 is configured to include a coupling recess 53 on an outer circumferential surface thereof for engagement with the coupling protrusion 71.

As another embodiment of the present invention, the driving-side sensing gear 70 may be configured to be integrally formed concentrically with respect to the rotation center of the output-shaft gear 50 of the reduction gear unit (not shown). That is, the driving-side sensing gear 70 may be configured to be integrally formed concentrically along an entire circumferential portion of an outer circumferential surface of the boss portion 51 of the output-shaft gear 50.

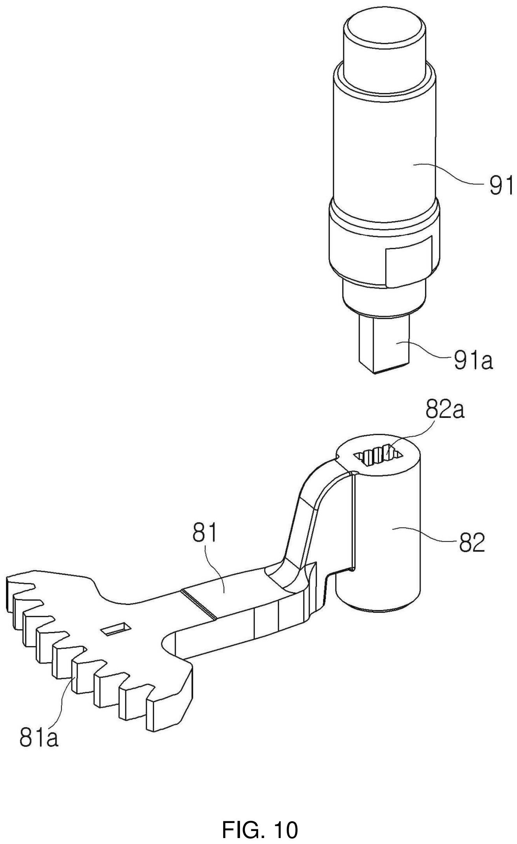

Referring to Fig. 10, the driven-side sensing gear 80 may be detachably installed with respect to the sensing shaft 91. For example, the driven-side sensing gear 80 may include a gear body portion 81 integrally forming gear teeth 81a in a form of a sector gear at a free end thereof, and a gear shaft portion 82 integrally formed with the gear body portion 81 and disposed at an axial center region of the sensing shaft 91. At this time, the gear shaft portion 82 is preferably formed with a coupling recess 82a for engagement with a shaft-coupling protrusion 91 a provided at a free end of the sensing shaft 91.

Meanwhile, in the rotary reduction actuator 1 according to an embodiment of the present invention, the interlocking structure constituting the rotational angle sensing unit is not limited to a tooth-meshing structure by gears such as the driving-side sensing gear 70 and the driven-side sensing gear 80, and may be replaced with any equivalent structure as long as rotational displacement occurring at the output end of the reduction gear unit can be accurately transmitted and provided to the sensing magnet 90.

Accordingly, since the rotary reduction actuator 1 according to the embodiment of the present invention configured as described above can detect a rotational position of the electric motor 20 through the rotational angle sensing unit including the driving-side sensing gear 70, the driven-side sensing gear 80, and the sensing magnet 90 provided at the output end of the reduction gear unit, it is possible not only to more accurately measure rotational displacement with respect to an output shaft of the actuator, but also to inversely calculate and estimate a rotational position of the drive shaft 30 of the electric motor 20 together therewith.

As a result, the rotary reduction actuator according to the embodiment of the present invention can obtain effects of ensuring reliability and robustness of control in performing displacement control on an operation target based on accurate rotational position information of the electric motor 20 detected at the output end of the reduction gear unit.

In particular, displacement control on an operation target that can be implemented by the rotary reduction actuator 1 according to the embodiment of the present invention can achieve an effect of enabling an accurate shift to a desired shift stage during a shift operation by a driver by applying the same to a device in which a series of control operations are performed based on rotational displacement, such as an electronic shift lever (SBW; Shift By Wire) system.

## Claims

1. A rotary reduction actuator having a rotational position detection function, comprising:
a drive shaft installed on an output side of an electric motor;
a reduction gear unit configured to reduce and output rotation of the drive shaft; and
a rotational angle sensing unit configured to detect rotational displacement of an output end of the reduction gear unit,
wherein the rotational angle sensing unit includes:
an interlocking structure interlocked with the output end of the reduction gear unit;
a sensing magnet installed to operate in interlocking relation with operation of the interlocking structure; and
a rotational angle detection sensor configured to detect rotational displacement of the sensing magnet.

2. The rotary reduction actuator having a rotational position detection function according to claim 1,
wherein the interlocking structure includes:
a driving-side sensing gear interlocked with an output-shaft gear provided at the output end of the reduction gear unit; and
a driven-side sensing gear interlocked with the driving-side sensing gear,
wherein a rotation center of the driving-side sensing gear is set coaxially with the drive shaft, and a rotation center of the driven-side sensing gear is set at a position spaced apart from the rotation center of the driving-side sensing gear.

3. The rotary reduction actuator having a rotational position detection function according to claim 2,
wherein the sensing magnet is installed on a sensing shaft located at a rotation center of the driven-side sensing gear, and the rotational angle detection sensor is installed at a position facing the sensing magnet.

4. The rotary reduction actuator having a rotational position detection function according to claim 2,
wherein the driving-side sensing gear is arranged and assembled concentrically with respect to a rotation center of the output-shaft gear.

5. The rotary reduction actuator having a rotational position detection function according to claim 4,
wherein the driving-side sensing gear includes a coupling protrusion on an inner circumferential surface thereof, and the output-shaft gear includes a coupling recess on an outer circumferential surface thereof for engagement with the coupling protrusion.

6. The rotary reduction actuator having a rotational position detection function according to claim 2,
wherein the driving-side sensing gear is integrally formed concentrically with respect to a rotation center of the output-shaft gear.

7. The rotary reduction actuator having a rotational position detection function according to claim 2,
wherein the driven-side sensing gear is detachably installed with respect to the sensing shaft.

8. The rotary reduction actuator having a rotational position detection function according to claim 7,
wherein the driven-side sensing gear includes a gear body portion having gear teeth, and a gear shaft portion integrally formed with the gear body portion and disposed at an axial center region of the sensing shaft, and
wherein the gear shaft portion is formed with a coupling recess for engagement with a shaft-coupling protrusion provided on the sensing shaft.

9. An electronic shift lever system, comprising the rotary reduction actuator having a rotational position detection function according to any one of claims 1 to 8,
wherein the rotary reduction actuator is applied to a select shaft of a transmission.
